# EUROPEAN PATENT SPECIFICATION

(11) **EP 3 562 430 B1**
(45) Date of publication and mention of the grant of the patent: **30.12.2020**
(21) Application number: 17752190.3
(22) Date of filing: 04.07.2017
(51) Int. Cl.: A61C 19/00

(54) **A DENTAL STORAGE BOX**
ZAHNAUFBEWAHRUNGSSCHACHTEL
BOÎTE DE RANGEMENT DENTAIRE

(30) Priority: 29.12.2016 TR 201620077
(43) Date of publication of application: 06.11.2019
(73) Proprietor: Istanbul Universitesi Rektorlugu, 34452 Istanbul (TR)
(72) Inventor: OZTURK, Oguz, Istanbul (TR); TUNA, Elif Bahar, Istanbul (TR); SEYHAN, Fatih, Istanbul (TR)
(74) Representative: Kaya, Erdem
(86) International application number: PCT/TR2017/050305
(87) International publication number: WO 2018/125009

(56) References cited:
- CN-U- 202 801 852
- CN-U- 203 306 325
- US-A- 4 054 220
- US-A- 4 689 014
- US-A1- 2007 134 624

## Description

### TECHNICAL FIELD

The present invention relates to a dental storage box wherein an avulsed tooth is stored until the tooth is fixed back to the tooth socket for recovery, in other words, until the tooth is replanted.

### PRIOR ART

Teeth may remove from the tooth socket. In case of avulsion where PDL (periodontal ligament) is completely broken, the vitality of the PDL cells is very important in terms of vitality of the tooth and prognosis of the tooth. Among the traumas related to mouth-tooth-jaw regions, avulsion (ex-articulation, total luxation), known as complete removal of the tooth from the socket thereof, is faced with a frequency of 1-16% in all of the traumas of the face region. As a result of these traumas, the front cutting teeth are affected with a frequency of 83.7%. When the tooth is completely removed from the socket, deterioration and damage begin in the pulp cells and in the structure of PDL. Therefore, the treatment prognosis of the avulsed tooth and duration of vitality of the tooth inside the mouth are closely related to the duration passed after trauma and the storage medium wherein the tooth is provided within this duration, and thus, closely related to the condition of PDL. As the tooth is completely removed outside of the socket, neurovascular support is interrupted and necrosis may result. After the trauma, the access duration to the doctor/clinic and the storage medium of the tooth cannot be in ideal conditions and urgent re-plantation option cannot be applied. In the period prior to re-plantation, in case the duration passing after the tooth is avulsed and in case the storage conditions are not suitable, the damaged PDL cells lead to inflammation resorption, and this inflammatory duration leads to root resorption, and as a result of this, the tooth is lost.

Moreover, the avulsed tooth shall be kept after being cleaned. The debris, existing on the tooth, affects the lifetime of the tooth and makes the re-plantation difficult.

CN203306325 discloses a various flavor drinking cup which comprises a cup main body (10), wherein liquid separation pieces (20) used for dividing an accommodating cavity in the cup main body are arranged in the accommodating cavity, so as to store for different soft drinks, and form different accommodating bins for accommodating the soft drinks of different flavours.

US2007/0134624 A1 discloses a dental storage box for storage and transport of a plurality of teeth in perforated carriers. The box comprising a single compartment containing a preserving liquid.

As a result, because of all of the abovementioned problems, an improvement is required in the related technical field.

### BRIEF DESCRIPTION OF THE INVENTION

The present invention relates to a dental storage box, for eliminating the above mentioned disadvantages and for bringing new advantages to the related technical field.

The main object of the present invention is to provide a dental storage box which stores an avulsed tooth after cleaning the tooth such that said tooth stays vital for a specific duration.

In order to realize all of the abovementioned objects and the objects which are to be deducted from the detailed description below, the present invention is a dental storage box according to independent claim 1.

Accordingly, the subject matter dental storage box comprises at least one separator provided inside the body and which separates the protective liquid and at least one cleaning liquid in a manner providing sealing. Thus, the chamber is separated into two compartments and more than one type of liquid can be placed.

The tooth can be placed inside the carrier and it can be immersed into and removed from the liquids without hand contact.

In a preferred embodiment, fixable inner covers are provided to prevent liquid passage.

### BRIEF DESCRIPTION OF THE FIGURES

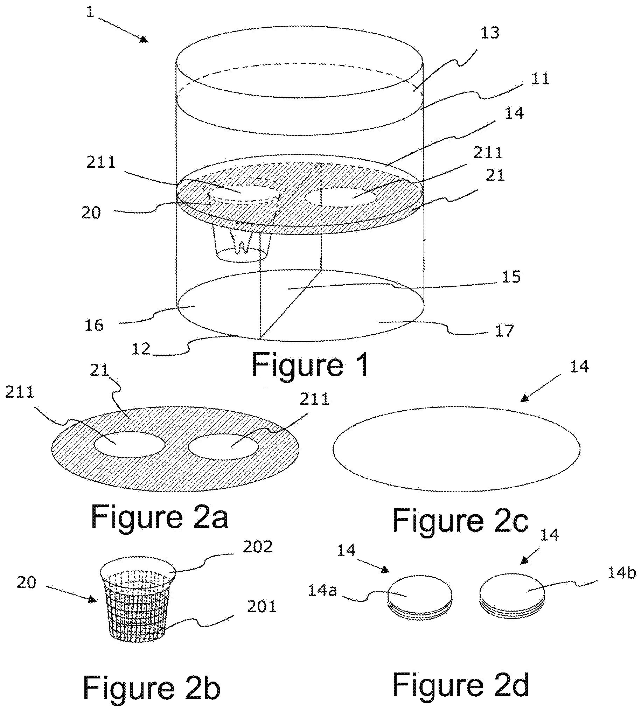

In Figure 1, a general view of the dental storage box is given.

In Figure 2a, a representative view of the holder is given.

In Figure 2b, a representative view of the carrier is given.

In Figure 2c, a representative view of the inner cover is given.

In Figure 2d, a representative view of an alternative inner cover is given.

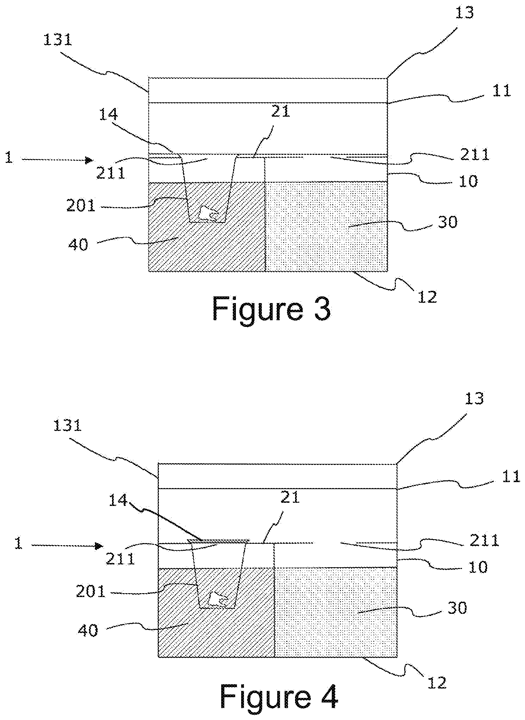

In Figure 3, a representative view of a cross section of the dental storage box is given.

In Figure 4, a representative view of a cross section of an alternative embodiment of the dental storage box is given.

### REFERENCE NUMBERS

- 1.: Dental storage box
- 10: Body
- 11: Inlet
- 12: Base
- 13: Outer cover
131 Holding wall
- 14: Inner cover
14a. First inner cover
14b. Second inner cover
- 141: Threaded part
- 15: Separator
- 16: First compartment
- 17: Second compartment
- 20: Carrier
201 Carrier body
202 Holding protrusions
- 21: Holder
211 Opening
- 30: Protective liquid
- 40: Cleaning liquid

### DETAILED DESCRIPTION OF THE INVENTION

In this detailed description, the subject matter dental storage box (1) is explained with references to examples without forming any restrictive effect only in order to make the subject more understandable.

The dental storage box (1) in general comprises a three-dimensional hollow body (10) of which at least one surface is open and at least one outer cover (13) provided so as to close the open surface of said body (10).

Said body (10) has a form accommodating liquid therein. The body (10) is made of a leak-proof material. In the preferred embodiment, the body (10) is in the form of a hollow prism whose body (10) base (12) is closed. In the preferred embodiment, the body (10) is an orthogonal prism whose body (10) base (12) is closed and where the surface of the base (12) which is on the opposite side with respect to the center of the body (10) is open. The open surface provided on the opposite side of the base (12) is defined as an inlet (11). In the preferred embodiment, the outer surface of said inlet (11) has a partially threaded form. An outer cover (13) is provided in order to close the inlet (11). In the preferred embodiment, said outer cover (13) is circular and it has a form which is compliant to the form of the body (10).

At least one holding wall (131) is provided which extends orthogonally to the plane of the cover from the edges of the outer cover (13). In the preferred embodiment, the holding wall (131) has a form which may completely encircle the outer cover (13). In other words, the holding wall (131) is in the form of a ring which is compliant to the outer cover (13) and which is connected in a manner providing sealing. In the preferred embodiment, the outer surface of the holding wall (131) has threads which are compliant to the threads provided around the inlet (11).

At least one separator (15) is provided which extends inside the body (10) and which extends from the base (12) towards the inlet (11). Said separator (15) is positioned in a manner separating the body (10) into at least two compartments. In the preferred embodiment, it is in the form of a separator plate. The separator (15) is isolated such that there is no liquid passage along the separator (15) between the first compartment (16) and the second compartment (17).

A holder (21) is provided which is connected to the end of the separator (15) close to the inlet (11). Said holder (21) is provided in an orthogonal manner to the separator (15) and in a connected manner to the separator (15) so as to close the first compartment (15) and the second compartment (17). There are at least two openings (211) on said holder (21) such that one is in the alignment of the first compartment (16) and the other one is in the alignment of the second compartment (17).

At least one carrier (20) is provided in order to be placed on said opening (211). Said carrier (20) has a form which may comprise a tooth therein and which permits partial liquid passage through the surfaces thereof. The carrier (20) is in the form of a beaker whose surfaces have openings (211). In an alternative embodiment, carrier (20) may have a cage form whose one surface can be closed and unclosed. In another alternative embodiment, the carrier (20) may be in the form of a funnel. The carrier (20) in the preferred embodiment comprises a carrier body (201) having surfaces having holes where the tooth is placed, and holding protrusions (202) which provide holding of the carrier (20) to the opening. Said holding protrusions (202) are provided outwardly in the periphery of the open surface of the carrier (20). When the carrier is passed through the opening (211), said holding protrusions (202) pass completely through the opening (211) and prevent falling into the first compartment (16) or into the second compartment (17).

There is an inner cover (14) placed on the holder (21) in order to close the openings (211) in case carrier (20) is placed to the openings (211) and thus, in order to prevent liquid passage outwardly from the opening (211). Said inner cover (14) has a dimension and form compliant to the holder (21). Said inner cover (14) is closed onto the holder (21) by providing sealing in a manner preventing possible liquid passage from the opening (211), existing in the alignment of the first compartment (16), to the opening existing in the alignment of the second compartment (17).

In an alternative embodiment, there are two inner covers (14), namely, a first inner cover (14a) and a second inner cover (14b). The first inner cover (14a) and the second inner cover (14b) are provided in a manner connected to the openings (211) provided on both the first compartment (16) and on the second compartment (17) and in a manner connected to the holding protrusions (202) of the carrier (20). Accordingly, there are threaded parts (141) provided at the edges of the first inner cover (14a) and the second inner cover (14b). By means of said threaded parts (141), the inlet of the openings (211) and of the carrier (20) is closed in a leak-proof manner.

The operation of the dental storage box (1), whose details are given above, is as follows:
A cleaning liquid is placed into the first compartment (16) or into the second compartment (17) of the dental storage box (1) whose details have been given. A protective liquid is placed to the other compartment. In the preferred embodiment, said cleaning liquid (40) is a liquid provided for purifying the debris on the tooth which is avulsed. The protective liquid is a liquid providing vitality to the tooth for a longer duration when compared with the duration where the tooth is exposed.

The avulsed tooth is placed to the carrier (20). Carrier (20) is placed to the opening of the compartment where cleaning liquid (40) is provided. Thus, the tooth contacts with liquid and when the tooth is desired to be removed, there is no need to contact the liquid by hand. The inner cover is closed onto the holder (21) and when required, the outer cover (13) is also closed. Thus, liquid passage between the first compartment (16) and the second compartment (17) is provided and partial isolation from the contaminating substances is provided. Meanwhile, there is no item which prevents taking of the tooth to the related location in order for said tooth to be replanted. After a predetermined duration, the outer cover (13) and the inner cover (14) are opened, the carrier (20) is removed from the compartment of the cleaning liquid (40) and it is placed to the opening of the compartment of the protective liquid (30). Thus, the vitality duration of the tooth is partially increased. Isolation is provided again by closing the inner cover (14) first of all, and by closing the outer cover (13) afterwards. Thus, the tooth can be protected and carried in this manner until the replant process is begun. When the tooth is desired to be replanted, first of all, the outer cover (13) is opened and afterwards, the inner cover (14) is opened, and the tooth, provided inside the carrier (20), can be accessed.

The protection scope of the present invention is set forth in the annexed Claims and cannot be restricted to the illustrative disclosures given above, under the detailed description.

## Claims

1. A dental storage box (1) comprising a protective liquid and a cleaning liquid, the dental storage box further comprising a 3-dimensional hollow body (10) whose at least one surface is open and at least one outer cover (13) which closes the open surface of said body (10) in a manner providing sealing,
the protective liquid is provided in the body (10) in order to preserve a tooth removed from the place thereof as a result of a trauma by at least partially increasing the vitality duration of the tooth, the dental storage box further comprising at least one separator (15) provided inside the body (10) and which separates the protective liquid (30) and the at least one cleaning liquid (40) placed into the body (10) in a manner providing sealing;
wherein a carrier (20) permitting partial liquid passage through the surfaces thereof is provided in order to provide the tooth, placed into said carrier (20), to be immersed into at least one of the protective liquid (30) and the cleaning liquid (40) -and said carrier is in the form of a beaker whose body (201) is perforated.

2. A dental storage box (1) according to claim 1, wherein at least one holder (21) is provided which is connected to said separator (15) and having at least two openings (211) for the placement of the carrier (20) in the alignment of at least one first compartment (16) and at least one second compartment (17) formed by the separator (15) inside the body (10).

3. A dental storage box (1) according to claim 2, wherein at least one inner cover (14) is provided which is connected to the holder (21) in order to prevent liquid passage between the first compartment (16) and the second compartment (17) in a compliant manner to said holder (21).

4. A dental storage box (1) according to claim 3, wherein said inner cover (14) is fixable such that no liquid passage occurs between the openings (211) and in a compliant size with said openings (211).

5. A dental storage box (1) according to claim 4, wherein the inner cover (14) comprises at least one threaded part (141) in order to provide a leak-proof closure of the openings (211) and of the carrier (20), wherein the inner cover (14) is connected to holding protrusions (202) on the carrier (20).

## Patentansprüche

1. Zahnaufbewahrungsbox (1) umfassend eine Schutzflüssigkeit und eine Reinigungsflüssigkeit, wobei die Zahnaufbewahrungsbox ferner einen 3-dimensionalen Hohlkörper (10) umfasst, dessen mindestens
eine Oberfläche offen ist, wobei mindesten eine äußere Abdeckung (13) die offene Oberfläche des Körpers (10) abdichtend verschließt,
wobei innerhalb des Körpers (10) eine Schutzflüssigkeit vorgesehen ist, so dass ein infolge eines Unfalls ausgefallener Zahn präserviert werden kann, indem die Vitalitätsdauer des Zahns mindestens teilweise verlängert wird, wobei die Zahnaufbewahrungsbox weiterhin
mindestens ein
Trennstück (15) umfasst, der innerhalb des Körpers (10) vorgesehen ist und die Schutzflüssigkeit (30) abtrennt (30), wobei die mindestens eine Reinigungsflüssigkeit (40) in den Körper (10) abdichtend eingebracht ist; wobei
ein Träger (20) vorgesehen ist, der einen teilweisen Flüssigkeitsdurchgang durch seine Oberflächen ermöglicht, so dass der in den Träger (20) eingelegte Zahn in mindestens eine der Schutzflüssigkeit (30) bzw. Reinigungsflüssigkeit (40) eingetaucht werden kann, und wobei der Träger die Form eines Bechers hat, dessen Körper (201) perforiert ist.

2. Zahnaufbewahrungsbox (1) nach Anspruch 1, wobei mindestens ein Halter (21) vorgesehen ist, der mit dem Trennstück (15) verbunden ist und mindestens zwei Öffnungen (211) aufweist, die die Anordnung des Trägers (20) ausgerichtet nach mindestens einem ersten Fach (16) und mindestens einem zweiten Fach (17) ermöglichen, die im Körper (10) durch das Trennstück (15) ausgebildet sind.

3. Zahnaufbewahrungsbox (1) nach Anspruch 2, wobei mindestens eine innere Abdeckung (14) vorgesehen ist, die mit dem Halfter (21) verbunden ist, so dass auf eine mit dem Halter (21) entsprechende Weise ein Flüssigkeitsdurchgang zwischen dem ersten Fach (16) und dem zweiten Fach (17) verhindert wird.

4. Zahnaufbewahrungsbox (1) nach Anspruch 3, wobei die innere Abdeckung so fixierbar ist, dass zwischen den Öffnungen (211) kein Flüssigkeitskanal, und in einer mit den Öffnungen (211) übereinstimmenden Größe ausgestaltet ist.

5. Zahnaufbewahrungsbox (1) nach Anspruch 4, wobei die innere Abdeckung (14) mindestens ein Gewindeteil (141) umfasst, die einen dichten Verschluss der Öffnungen (211) und des Trägers (20) bereitstellt, wobei die innere Abdeckung (14) mit Haltevorsprüngen (202) am Träger (20) verbunden ist.

## Revendications

1. Boîte de rangement dentaire (1) comprenant un liquide protecteur et un liquide de nettoyage, la boîte de rangement dentaire comprenant en outre un corps creux tridimensionnel (10) dont au moins une surface est ouverte et au moins un couvercle extérieur (13) qui ferme l'ouverture surface dudit corps (10) de manière à assurer l'étanchéité.
le liquide protecteur est prévu dans le corps (10) afin de préserver une dent enlevée de son emplacement à la suite d'un traumatisme en augmentant au moins partiellement la durée de vitalité de la dent, la boîte de rangement dentaire comprenant en outre
au moins un séparateur (15) prévu à l'intérieur du corps (10) et qui sépare le liquide protecteur (30) et
au moins un liquide de nettoyage (40) placé dans le corps (10) de manière à assurer l'étanchéité;
dans lequel un support (20) permettant un passage partiel de liquide à travers ses surfaces est prévu afin de permettre à la dent, placée dans ledit support (20), d'être immergée dans au moins l'un du liquide protecteur (30) et du liquide de nettoyage (40) l'extrémité dudit support se présente sous la forme d'un bécher dont le corps (201) est perforé.

2. Boîte de rangement dentaire (1) selon la revendication 1, dans laquelle au moins un support (21) est prévu qui est connecté audit séparateur (15) et ayant au moins deux ouvertures (211) pour le placement du support (20) dans l'alignement d'au moins un premier compartiment (16) et d'au moins un deuxième compartiment (17) formé par le séparateur (15) à l'intérieur du corps (10).

3. Boîte de rangement dentaire (1) selon la revendication 2, dans laquelle au moins un couvercle intérieur (14) est prévu qui est connecté au support (21) afin d'empêcher le passage de liquide entre le premier compartiment (16) et le deuxième compartiment (17) de manière conforme audit support (21).

4. Boîte de rangement dentaire (1) selon la revendication 3, dans laquelle ledit couvercle intérieur (14) peut être fixé de telle sorte qu'aucun passage de liquide ne se produit entre les ouvertures (211) et dans une taille compatible avec lesdites ouvertures (211).

5. Boîte de rangement dentaire (1) selon la revendication 4, dans laquelle le couvercle intérieur (14) comprend au moins une partie filetée (141) afin de fournir une fermeture étanche des ouvertures (211) et du support (20). , dans lequel le couvercle intérieur (14) est connecté à des saillies de maintien (202) sur le support (20).
